# EUROPÄISCHE PATENTANMELDUNG

(11) **EP 1 114 580 A2**
(43) Veröffentlichungstag der Anmeldung: **11.07.2001**
(21) Anmeldenummer: 01100245.8
(22) Anmeldetag: 03.01.2001
(51) Int. Cl.: A01J 21/00, A01J 23/00

(54) **Verfahren und Vorrichtung zum Herstellen und Einwickeln eines aus mehreren Einzelportionen bestehenden weichplastischen Körpers, vorzugsweise eines fetthaltigen Produktes, wie Butter, Margarine oder dergleichen**

(30) Priorität: 07.01.2000 DE 10000297
(71) Anmelder: Benz & Hilgers GmbH, 41468 Neuss (DE)
(72) Erfinder: Rütter, Karl Josef, 50259 Pulheim (DE)
(74) Vertreter: Lichti, Heiner, Dipl.-Ing.

(57) **Zusammenfassung**

Die Erfindung bezieht sich auf Verfahren und eine Vorrichtung zum Herstellen und Einwickeln eines aus mehreren Einzelportionen bestehenden weichplastischen Körpers, vorzugsweise eines fetthaltigen Produktes, wie Butter, Margarine oder dergleichen, die dadurch auf besonders einfache Weise hergestellt und eingewickelt wird und bei der bei Bedarf einzelne Portionen leicht entnommen werden können, daß das fetthaltige Produkt mit Hilfe eines in eines Produktaustrittskanals (14) angeordneten Gittermundstücks (31) unter Bildung von durch Trennfugen geteilten Einzelportionen in eine einseitig offene Verpackungshülle (4) eingefüllt wird und wobei im Bereich der Trennfugen mittels eines Eindrückwerkzeugs (38) Einkerbungen (43) Rillen oder dergleichen eingebracht werden.

## Beschreibung

Die Erfindung bezieht sich auf ein Verfahren zum Herstellen und Einwickeln eines aus mehreren Einzelportionen bestehenden weichplastischen Körpers, vorzugsweise eines fetthaltigen Produktes, wie Butter, Margarine oder dergleichen.

Aus der EP 0 763 324 A1 ist ein Verfahren zum Vorbereiten von vorgeschnittenen Formblöcken aus einer Fett oder Öl enthaltenden Wasser in Öl Emulsion bekanntgeworden. Nach diesem Verfahren wird das Produkt, wie Butter oder Margarine, zunächst in eine Form eingefüllt, welche einen Teilungsrahmen mit einer Vielzahl von Trennstegen aufweist, so daß das eingefüllte Produkt in mehrere Einzelportionen aufgeteilt wird. Die Form wird danach von der Füllstation zu einer Entladestation transportiert und dort wird das Produkt aus der Form durch einen Preßstempel herausgedrückt, der mit den Trennstegen der Form zusammenwirkende Rillen aufweist.

Der Erfindung liegt die Aufgabe zugrunde, ein Verfahren der eingangs genannten Art vorzuschlagen und eine Vorrichtung zu schaffen, durch das bzw. die auf besonders einfache Weise ein zerteilter Produktkörper, vorzugsweise ein fetthaltiges Produkt, wie Butter, Margarine oder dergleichen, hergestellt und eingewickelt wird und bei dem bei Bedarf einzelne Portionen leicht entnommen werden können.

In verfahrensmäßiger Hinsicht wird die der Erfindung zugrundeliegende Aufgabe dadurch gelöst, daß zunächst eine zumindest einseitig offene Verpackungshülle gebildet und in diese in ansteigender Richtung das fetthaltige Produkt unter Bildung von die Einzelportionen an einander zugewandten Seiten begrenzenden Trennfugen eingefüllt wird, in deren Bereich an wenigstens einer Seite periphere Einkerbungen, Rillen oder dergleichen eingebracht werden und worauf letztendlich die offene Seite der Verpackungshülle verschlossen wird.

Nach der Lehre der Erfindung kann das fetthaltige Produkt in üblicher Weise in dosierter Menge abgegeben werden. Es muß lediglich sichergestellt sein, daß sich durch eine spezielle Führung des Produktes die Trennfugen ergeben, was beispielsweise dann passiert, wenn das Produkt an Flächen vorbeibewegt wird, da dabei der bekannte Effekt der Schichtenbildung in Form von Trennfugen, z. B. bei Butter, ausgenutzt wird. Diese sind nicht sichtbar. Um nun dennoch eine leichte Entnahme einer Einzelportion von dem Gesamtkörper zu ermöglichen, werden in einem weiteren Schritt nach der Erfindung im Bereich der Trennfugen Einkerbungen bzw. Rillen eingebracht, so daß bei der Entnahme in diese eingegriffen und dadurch die Einzelportion entfernt werden kann.

Während das Einbringen der Trennfugen durch flächige Trennstege eines am Produktaustritt der Fülleinrichtung angeordneten Gittermundstücks erzeugt werden, lassen sich die Einkerbungen, Rillen oder dergleichen, durch ein Eindrückwerkzeug mit der Symmetrie des Gittermundstücks entsprechenden Eindrückelementen erreichen. Die Eindrückelemente können als abgerundet ausgebildete Prägestege und vorzugsweise auch beheizbar ausgebildet sein.

Ein bevorzugtes Ausführungsbeispiel der Erfindung ist in der Zeichnung dargestellt und wird im folgenden näher erläutert. Es zeigen:
- Figur 1: eine Verpackungsanlage als Rundläufer zur Herstellung einer erfindungsgemäß ausgebildeten Verpackung in schematischer Darstellung,
- Figur 2: eine vereinfachte Aufsicht auf die in Figur 1 gezeigte Verpackungsanlage,
- Figur 3: einen detaillierteren Schnitt entlang der Linie III-III der Figur 2 in vergrößertem Maßstab,
- Figur 4: einen Schnitt entlang der Linie IV-IV der Figur 2 in vergrößertem Maßstab und in detaillierterer Ausführung,
- Figur 5: einen Teil der Vorrichtung in Figur 4 in vergrößertem Maßstab und
- Figur 6: eine vereinfachte Aufsicht auf ein Gittermundstück.

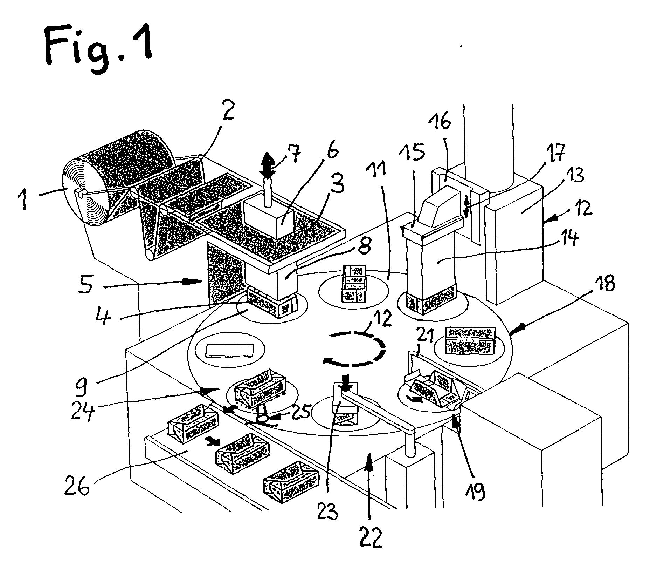

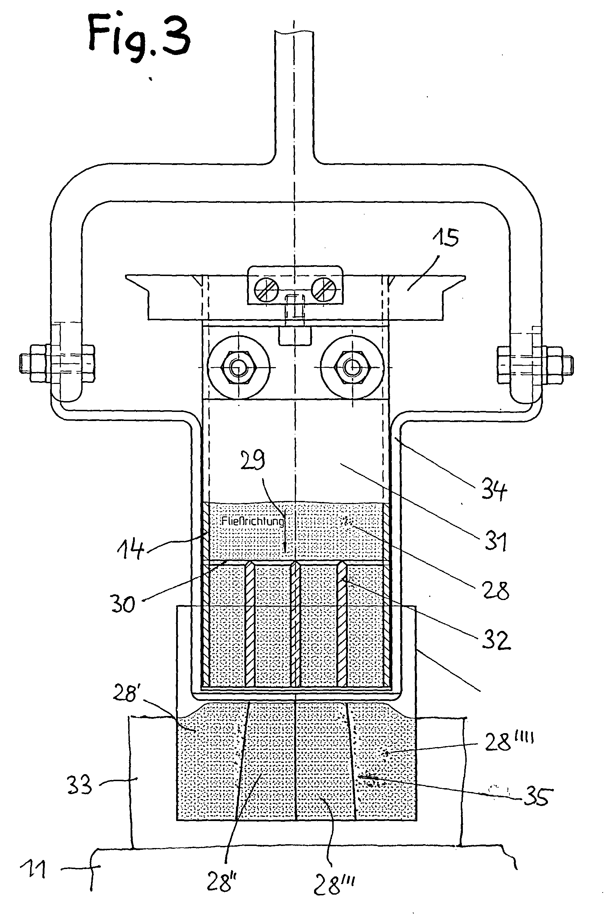

In Figur 1 ist eine Verpackungsanlage dargestellt, in der von einer Rolle 1 eine Materialbahn 2, beispielsweise aus orientiertem Polypropylen oder aluminiumkaschierter Folie mit Hilfe von nicht dargestellten Vorzugsrollen abziehbar ist. Mit Hilfe einer nicht dargestellten Quertrenneinrichtung lassen sich von der Materialbahn 2 im wesentlichen rechteckförmige Zuschnitte 3 abtrennen, die zur Bildung einer Verpackungshülle 4 einer Hüllenbildungsstation 5 zugeführt werden können. Zur Hüllenbildungsstation 5 gehört zunächst ein Hüllenstempel 6, der in der angegebenen Pfeilrichtung 7 auf und ab bewegt werden kann. Ausgehend von der in Figur 1 dargestellten Position kann mit Hilfe des Hüllenstempels 6 der Zuschnitt 3 in einen Faltschacht 8 der Hüllenbildungsstation 5 eingebracht werden, so daß schließlich die bereits oben genannte Verpackungshülle 4 gebildet wird. Während der Hüllenbildung befindet sich die Verpackungshülle 4 in einer Aufnahme 9 eines Drehtellers 11, der in der angegebenen Pfeilrichtung 12 im Maschinentakt umlaufend antreibbar ist. Unter Zwischenschaltung einer Zwischenstation läßt sich die nach oben einseitig offene Verpackungshülle 4 in einem weiteren Takt bis in eine Füllstation 12 bewegen, die im wesentlichen einen Dosiertrichter 13 und einen Füllschacht 14 aufweist. Der Füllschacht 14 ist über ein Tragelement 15 an einer Schwalbenschwanzführung 16 der Fülleinrichtung im Sinne des Doppelpfeils 17 im wesentlichen vertikal nach oben und unten verschiebbar gelagert. Weitere Einzelheiten dieser Fülleinrichtung werden weiter unten anhand der Figur 3 beschrieben.

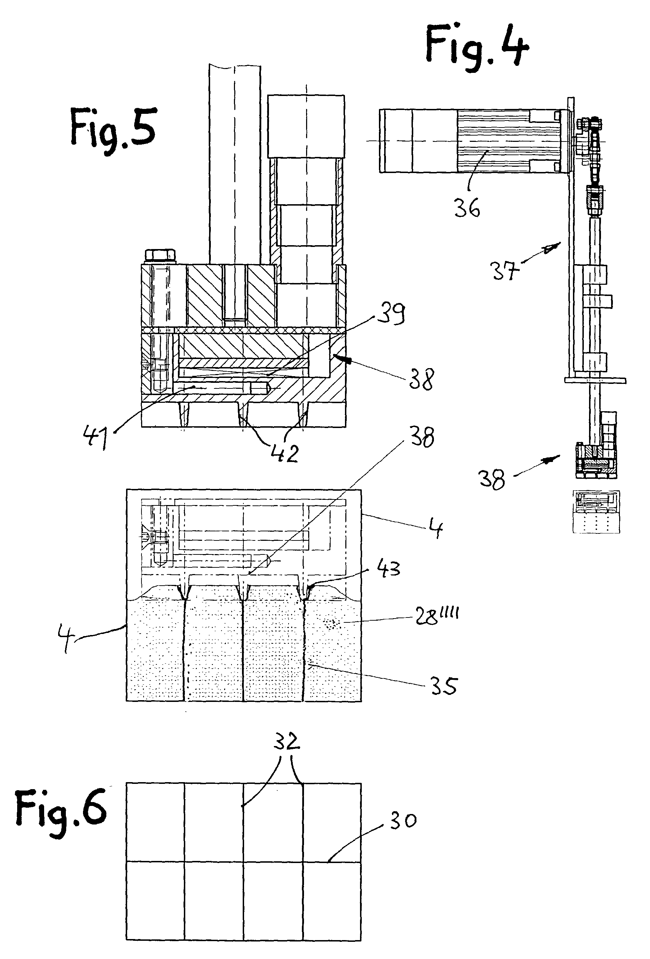

In einer der Füllstation 12 nachfolgenden Eindrückstation 18 lassen sich, wie das weiter unten anhand der Figuren 4 und 5 erläutert wird, bestimmte Eindrück- bzw. Prägemuster einbringen, deren Bedeutung gleichfalls später erläutert wird.

Hinter der Eindrückstation befindet sich in Umlaufrichtung 12 des Drehtisches 11 eine Faltstation 19, deren Werkzeuge 21 dazu dienen, die nach oben noch offene Verpakkungshülle 4 zu schließen.

Der Faltstation 19 folgt eine Preßstation 22, um mit Hilfe einer Preßplatte 23 dem hergestellten Produkt die endgültige Form zu geben.

In einer nachfolgenden Ausschubstation 24 läßt sich jeweils das fertig eingewickelte Paket gegebenenfalls unter Zuhilfenahme einer Aushubeinrichtung 25 auf ein Förderband 26 bringen, so daß die Pakete in einen nicht dargestellten Umkarton oder dergleichen verpackt werden können.

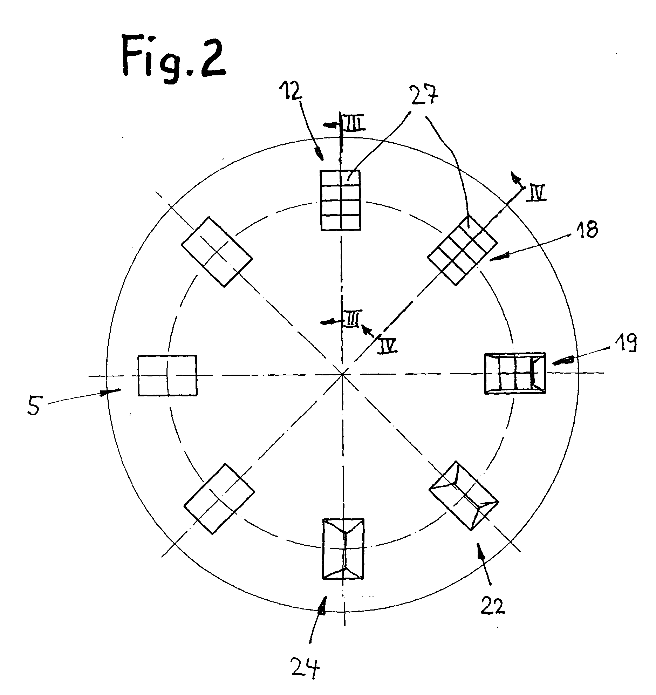

Die vorbeschriebenen Stationen sind in einer Aufsicht auf den Drehteller 11 in Figur 2 in vereinfachter Form dargestellt. Dort ist ersichtlich, daß das Produkt, ausgehend von der Füllstation 12, in mehrere hintereinander und nebeneinander liegende Einzelportionen 27 aufgeteilt ist.

Das Aufteilen bzw. Zerteilen des Produktes wird nun anhand der Figur 3 beschrieben. In dem Füllschacht 14 steht das abzufüllende Produkt 28, wie z. B. Butter, Margarine oder dergleichen, unter Druck und wird im Sinne des Pfeils 29 von oben her in die Verpakkungshülle 4 eingefüllt. Dabei durchströmt das Produkt 28 ein am unteren Ende des Füllschachtes eingesetztes Gittermundstück 31, das im einzelnen wandflächenförmige Trennstege 32 aufweist. Im dargestellten Ausführungsbeispiel sind drei mit Abstand zueinander angeordnete Trennstege dargestellt, die durch einen quer dazu verlaufenden mittleren Trennsteg 30 miteinander verbunden sind. Beim Abfüllen des Produktes befindet sich die Verpackungshülle 4 teilweise in einer Form 33 des Drehtisches 11. Zum Beginn des Abfüllens des Produktes befindet sich das untere Ende des Gittermundstükkes 31 bzw. des Füllschachtes 14 in etwa in Höhe der strichpunktiert dargestellten Anfangsposition in der Nähe des Bodens der gefalteten Verpackungshülle 4. Während des kontinuierlichen Einströmens des Produktes wird der Füllschacht zusammen mit dem Gittermundstück 31 angehoben, bis die Endhöhe des Produktkörpers erreicht ist. Am Ende des Abfüllvorgangs wird mit Hilfe eines in den Füllstrom einbringbaren, vorzugsweise einschwenkbaren Abschneiders 34, das Produkt abgeschnitten.

In Folge des Vorbeibewegens des Produktes 28 entlang der Wände der Trennstege 32 kommt es beispielsweise bei Butter zu dem bekannten Effekt der Schichtenbildung, mit der Folge, daß sich in dem abgefüllten Produkt innerhalb der Verpackungshülle 4 Trennfugen 35 bilden, so wie das in Figur 3 angedeutet ist. Die Trennfugen sind weitgehend unsichtbar. Sie teilen das Gesamtprodukt in Einzelportionen 28', 28", 28"', 28"" usw. auf.

Nach Beendigung des Füllvorgangs wird der Drehteller 11 um einen Schritt weiter in die Eindrückstation 18 geschaltet. Die dort vorhandenen Werkzeuge sind im einzelnen in den Figuren 4 und 5 näher erläutert. Die Eindrückstation 18 weist zunächst eine von einem Servomotor 36 angetriebene Antriebseinrichtung 37 auf, die an ihrem unteren Ende ein Eindrückwerkzeug 38 aufweist. Das Eindrückwerkzeug 38 ist mit einer Heizplatte 39 und einem Temperaturfühler 41 ausgerüstet und besitzt an seiner Unterseite Eindrückelemente 42, die in ihrer Anordnung der Symmetrie des Gittermundstücks der Füllvorrichtung entsprechen. Auf diese Weise ist es durch Absenken des Eindrückwerkzeugs 38 möglich, so wie das im unteren Teil der Figur 5 mit strichpunktierten Linien angedeutet ist, in Höhe der Trennfugen 35 im oberen Bereich der Einzelportionen Einkerbungen bzw. Rillen 43 einzubringen. Diese Einkerbungen 43 bzw. Rillen oder dergleichen werden in der nachfolgenden Faltstation 19 durch Umlegen der bis dahin nach oben stehenden Lappen der Verpackungshülle 4 abgedeckt, so daß die Produktpackung, wie eingangs erläutert, fertiggestellt und zum Versand abtransportiert werden kann.

Wird nun bei Gebrauch eine oder mehrere Einzelportionen der gesamten Packung benötigt, so öffnet man an einer Seite die Packung, benutzt gegebenenfalls unter Zuhilfenahme des Einwicklers den Daumen oder einen anderen Finger, um mit diesem in die eingebrachte Kerbe bzw. Rille 43 einzugreifen und so das betreffende Einzelportionsstück entlang der betreffenden Trennfuge 35 von der restlichen Verpackung zu lösen.

Um den Prozeß des Einbringens der Einkerbungen 43 und Rillen zu erleichtern, kann das Werkzeug erwärmt werden, beispielsweise auf eine Temperatur von 30° bis 50°, vorzugsweise ca. 43°. Die Eindringtiefe der Eindrückelemente in das Produkt kann wenige Millimeter, beispielsweise 2 mm, betragen.

Das erfindungsgemäße Verfahren und die Vorrichtung eignen sich besonders zum Herstellen von Einzelportionspackungen aus Butter. Grundsätzlich ist die Vorgehensweise aber auch bei anderen fetthaltigen Produkten, wie beispielsweise Margarine oder dergleichen, möglich.

Durch eine entsprechende Ausgestaltung und Anordnung der Trennstege 30, 32 und der Eindrückelemente 42 lassen sich bestimmte Prägemuster erzielen.

## Patentansprüche

1. Verfahren zum Herstellen und Einwickeln eines aus mehreren Einzelportionen bestehenden weichplastischen Körpers, vorzugsweise eines fetthaltigen Produktes, wie Butter, Margarine oder dergleichen, **dadurch gekennzeichnet,** daß zunächst eine zumindest einseitig offene Verpackungshülle gebildet und in diese in ansteigender Richtung das fetthaltige Produkt unter Bildung von die Einzelportionen an einander zugewandten Seiten begrenzenden Trennfugen eingefüllt wird, in deren Bereich an wenigstens einer Seite periphere Einkerbungen, Rillen oder dergleichen eingebracht werden und daß letztendlich die offene Seite der Verpackungshülle verschlossen wird.

2. Verfahren nach Anspruch 1, **dadurch gekennzeichnet,** daß mehrere hinter- und nebeneinanderliegende Einzelportionen erzeugt werden.

3. Verfahren nach Anspruch 1 oder 2, **dadurch gekennzeichnet,** daß das Bilden der Verpackungshülle, das einzelportionsgerechte Einfüllen des Produktes in die Verpakkungshülle sowie das Einbringen der Einkerbungen, Rillen oder dergleichen und schließlich das Verschließen der Verpackungshülle in jeweils einer separaten Arbeitsstation durchgeführt werden.

4. Verfahren nach einem oder mehreren der Ansprüche 1 bis 3, **dadurch gekennzeichnet,** daß das Einbringen der Einkerbungen, Rillen oder dergleichen mechanisch und gegebenenfalls zusätzlich unter Zuhilfenahme von Wärmeeinwirkung erfolgt.

5. Vorrichtung zum Herstellen und Einwickeln eines aus mehreren Einzelportionen (28', 28", 28"', 28"") bestehenden weichplastischen Körpers, vorzugsweise eines fetthaltigen Produktes (28), wie Butter, Margarine oder dergleichen unter Verwendung einer von einem von einer Materialbahn (2) abgetrennten Zuschnitt (3) in einer Hüllenbildungsstation (5) gebildeten Verpackungshülle (4) sowie einer Fülleinrichtung (13) zum dosierten Abfüllen des Produktes (28) sowie einer Faltstation (19), **dadurch gekennzeichnet,** daß im Bereich eines Produktaustrittskanals (Füllschacht 14) der Fülleinrichtung ein wandflächige Trennstege (32) aufweisendes Gittermundstück (31) angeordnet ist und daß ferner ein Eindrückwerkzeug (38) vorgesehen ist, das der Symmetrie des Gittermundstücks (31) entsprechende Eindrückelemente (42) aufweist.

6. Vorrichtung nach Anspruch 5, **dadurch gekennzeichnet,** daß die Eindrückelemente als abgerundet ausgebildete Prägestege (42) ausgebildet sind.

7. Vorrichtung nach Anspruch 5 oder 6, **dadurch gekennzeichnet,** daß zumindest die Eindrückelemente (42) des Eindrückwerkzeugs (38) beheizbar sind.

8. Vorrichtung nach einem oder mehreren der Ansprüche 5 bis 7, **dadurch gekennzeichnet,** daß das Eindrückwerkzeug (38) von einem Servomotor (36) angetrieben ist.

9. Vorrichtung nach einem oder mehreren der Ansprüche 5 bis 8, **gekennzeichnet durch** einen in der Fülleinrichtung in den Produktstrom einbringbaren, vorzugsweise einschwenkbaren Abschneider (34).

10. Vorrichtung nach einem oder mehreren der Ansprüche 5 bis 9, **gekennzeichnet durch** einen um eine im wesentlichen vertikale Achse taktweise umlaufend angetriebenen Drehteller (11).
